# EUROPÄISCHE PATENTSCHRIFT

(11) **EP 1 837 448 B1**
(45) Veröffentlichungstag und Bekanntmachung des Hinweises auf die Patenterteilung: **21.04.2021**
(21) Anmeldenummer: 07090044.4
(22) Anmeldetag: 13.03.2007
(51) Int. Cl.: E04B 1/80, E04C 2/16

(54) **Dämmstoffplatte bzw. -matte aus einem Holzwerkstoff-Bindemittel-Gemisch**
Insulating board or mat made of a compound of wooden material and binding material
Plaque ou tapis de matériau isolant provenant d'un mélange de liant et de matériau dérivé du bois

(30) Priorität: 16.03.2006 DE 102006013357
(43) Veröffentlichungstag der Anmeldung: 26.09.2007
(73) Patentinhaber: SWISS KRONO Tec AG, 6004 Luzern (CH)
(72) Erfinder:
(74) Vertreter: Maikowski & Ninnemann Patentanwälte Partnerschaft mbB

(56) Entgegenhaltungen:
- EP-A1- 1 582 646
- US-A- 5 188 707
- US-A1- 2002 173 564
- US-A1- 2004 089 418

## Beschreibung

Die Erfindung betrifft Dämmstoffplatten bzw. -matten aus Holzwerkstoffen mit einem Bindemittel.

Die Herstellung von Dämmstoffplatten bzw. -matten aus Fasern, beispielsweise Holz-, Flachs-, Hanf-, oder Wollfasern oder dergleichen, gegebenenfalls unter Zugabe thermoplastischer Bindemittelfasern, ist bekannt. Die Herstellung dieser Dämmstoffe und Vliese erfolgt im Trockenverfahren beispielsweise mit Vlieslegungsverfahren des Faser-Bindemittel-Gemisches.

Bei Holzfaserdämmstoffen kann die Herstellung der Dämmstoffplatten bzw. -matten auch im Nassverfahren mit einem anschließenden Warmpressverfahren erfolgen.

Allen Holzwerkstoff-Dämmplatten bzw. -matten ist gemein, dass die Holzwerkstoffe mit Bindefasern zu einem Fasergemisch vermischt werden. Die Qualität der Holzwerkstoff-Dämmplatten bzw. -matten wird dabei maßgeblich durch eine homogene Verteilung der Bindefasern mit den Holzwerkstoffen bestimmt. Je feiner und homogener das Gemisch ist, desto mehr Vernetzungspunkte ergeben sich und die Holzwerkstoff-Dämmplatten bzw. -matten weisen verbesserte Eigenschaften, wie zum Beispiel eine gute Wärmeleitzahl, eine gute Querzug- und Druckfestigkeit auf.

Als Bindefasern werden thermisch aktivierbare Kunststofffasern verwendet. Solche Kunststofffasern bestehen beispielsweise aus Polypropylen, Polyethylen oder Polyester. Die Kunststoffe werden zu Mono- oder Bikomponentenfasern verarbeitet.

So ist aus der EP 1582646 A1 eine Dämmstoffplatte aus einem Holzwerkstoff-Bindemittelfaser-Gemisch bekannt, welchem ein Additiv aus einem thermisch beständigen Kern und einer thermisch aktivierbaren Beschichtung zugegeben wird und die thermisch aktivierbare Beschichtung unter Wärmezufuhr aktivierbar ist. Der Kern besteht aus einem Granulat, beispielsweise aus Perliten, oder einer Faser.

Nachteilig ist, dass Kunststofffasern unverrottbar sind und in dem Holzwerkstoff-Fasergemisch mit Mengen zwischen 5 und 20% enthalten sind. Der hohe Anteil an Kunststofffasern ergibt einen hohen Preis des Endproduktes.

Holzfaserdämmstoffe erheben den Anspruch, ökologisch wertvolle Produkte zu sein. Dem Ansatz der Verwendung natürlicher Werkstoffe steht jedoch der als Bindemittel verwendete Kunststoffanteil entgegen.

Ebenso ist es bekannt, Bindemittel aus nachwachsenden Produkten, wie Mais oder Kartoffeln, einzusetzen, jedoch überwiegend in Pulverform, so dass die Vernetzung punktuell und nicht, wie bei einer Bindefaser üblich, entlang einer Faser geschieht. Dadurch geschieht nur ein lockerer Aufbau und die Bindefestigkeit, insbesondere die Querzugfestigkeit dieser Produkte ist gering.

Auch die Verwendung von Lignin als Bestandteil einer Bindemittelkomponente ist bekannt. So offenbart die US 2004/0089418 A1 ein Bindemittel, welches bei der Herstellung von lignozellulosehaltigen Kompositionen einsetzbar ist, umfassend ein Reaktionsprodukt aus i) Lignin und ii) mindestens ein formaldehyd-freies Härtungsmittel enthaltend mindestens ein Amin, Amid, Imin, Imid oder eine N-haltige heterozyklische Verbindung. Aus der US 2002/0173564 A1 ist eine Bindemittelzusammensetzung als Klebstoff für Holzwerkstoffe enthaltend Furfurylalkohol, Lignin, Maleinsäureanhydrid, Eisen und Zink bekannt. Das ligninhaltige Material wird als Kleber für das Zusammenfügen von Holzschichten eingesetzt. In der US 5,188,707 wird ein Ansatz zur Gewinnung von Lignin beschrieben. Hier wird das Lignin von Zellulose unter Verwendung von Alkanolaminen chemisch abgetrennt und das gewonnene depolymerisierte Lignin zur Härtung von Holz verwendet.

Der Erfindung liegt die Aufgabe zugrunde, bei der Herstellung von Holzwerkstoff-Dämmplatten bzw. -matten den Anteil an Bindemittelkunststofffasern zu verringern und durch einen ökologischen Werkstoff zu ersetzen. Erfindungsgemäß wird die Aufgabe durch die kennzeichnenden Merkmale des Anspruchs 1 gelöst.

Die Lehren der Unteransprüche geben besondere Ausgestaltungen der Lehre des Anspruchs 1.

Erfindungsgemäß werden den Holzwerkstoffen zur Bildung von Dämmplatten bzw. -matten als Bindemittel ein Bikomponentenmaterial aus einem Träger in Form von Kunststoffstützfasern und einem thermisch aktivierbaren ligninhaltigen Material, wobei das ligninhaltige Material als Mantel auf dem Träger aufgetragen vorliegt, zugesetzt. Der thermisch aktivierbare Kleber auf Ligninbasis kann in Mengen zugesetzt werden, die zwischen 5 bis 40%, vorzugsweise 5 bis 20% liegen.

Ligninhaltige Produkte fallen als Abprodukte bei der Zellstoffproduktion in großen Mengen an. Den als Flüssigkeit anfallenden ligninhaltigen Produkten werden Polysaccharide und wässrige Lösungsmittel zugesetzt und zu einem zähflüssigen Bindemittel für die Holzwerkstoffe aufbereitet. Das erhaltene Produkt wird durch Zentrifugieren abgetrennt und die Restfeuchtigkeit durch Auspressen entfernt.

Das erhaltene Produkt kann in einem gekühlten Extruder mit Schlitzblech in ein faserförmiges Produkt überführt werden.

Nach einer anderen Variante wird das durch Zentrifugieren erhaltene Produkt in einem Mahlwerk zu einem Pulver aufbereitet.

Die so erhaltenen Produkte werden als Bindemittel bei der Herstellung schwerer und druckfester Holzfaserdämmstoffplatten bzw. -matten mit Rohdichten im Bereich von 80 bis 300 kg/m³ und Dickenbereichen von 3 bis 160 mm eingesetzt. Die erhaltenen Platten finden beispielsweise als Unterlegplatten für einen Fußbodenbelag zur Reduzierung von Tritt- und/oder Raumschall Verwendung. Bei solchen Platten liegt die Rohdichte vorzugsweise im Bereich von 130 bis 300 kg/m³ und die Dicke vorzugsweise im Bereich von 3 bis 15 mm.

Werden die Platten als Wärmedämmung im Außenbereich eingesetzt, sollte die Rohdichte vorzugsweise im Bereich von 80 bis 160 kg/m³ und die Dicke vorzugsweise im Bereich von 40 bis 160 mm liegen.

Durch die dunkle Färbung des Bindemittels auf Ligninbasis wird der Einsatz der reinen Bindefaser bzw des Pulvers auf Ligninbasis vorzugsweise bei solchen Platten bzw. Matten vorgenommen, bei denen die Färbung nicht stört, obwohl durch die geringen Mengen an Bindemittel kaum eine Farbänderung bei den hergestellten Holzwerkstoff-Dämmplatten bzw. -matten eintritt.

Ebenso ist es möglich, dass nach dem Zentrifugieren erhaltene ligninhaltige Material direkt oder nachdem es zu einem Pulver zermahlen wurde auf einen Träger aufzutragen. Man erhält ein so genanntes Bikomponentenmaterial.

Als Träger kommen erfindungsgemäß Kunststoffe infrage. Die Träger sind erfindungsgemäß Fasern. Beim Einsatz eines Trägers wird der Anteil an Bindemitteln gesenkt und gleichzeitig die Stützfunktion verbessert.

Die Herstellung des so genannten Bikomponentenmaterials geschieht durch Benetzung des Trägers. Dazu wird das Trägermaterial in die Schmelze oder in eine Lösung des Bindemittels auf Ligninbasis eingetaucht oder mit einer Lösung des Bindemittels besprüht und anschließend getrocknet. Besonders bei Granulaten als Träger könnten diese gemeinsam mit dem pulverförmigen Bindmittel in einem Mischer, vorzugsweise Trommelmischer, zusammengebracht werden.

Bei der Anwendung von Kunststoffen in Faserform als Trägermaterial kann das Bikomponentenmaterial beispielsweise durch Koextrusion erhalten werden.

Bei einem optionalen nicht-erfindungsgemäßen vollständigen oder teilweisen Einsatz natürlicher Fasern, wie Hanf, Wolle, Sisal, Flachs oder Ähnliches als Träger für das Bindemittel wird der Anteil an unverrottbaren Anteilen im fertigen Produkt immens gesenkt. Gleichzeitig wird der Faktor der Farbveränderung durch das Bindemittel durch den Einsatz des Trägermaterials vermindert.

Werden als Trägermaterial Fasern aus Kunststoffen eingesetzt, so sollte deren Erweichungspunkt vorzugsweise höher als der des eingesetzten Bindemittels auf Ligninbasis liegen.

Der Einsatz des Bikomponentenmaterials erfolgt vorzugsweise bei der Herstellung leichter Holzfaserdämmstoffplatten bzw. -matten mit guter Querzugsfestigkeit. Die vorgenannten Holzfaserdämmstoffplatten bzw. -matten weisen Dicken von 40 bis 250 mm bei einer Rohdichte von 30 bis 140 kg/m³, vorzugsweise 35 bis 55 kg/m³, auf und werden beispielsweise für Gefachdämmungen im Innenbereich eingesetzt.

Naturfasern aus Flachs, Hanf, Sisal u. ä. als Stützfasern bei ligninhaltigen Bikomponentenmaterialien (nichterfindungegmäß) werden insbesondere zur Herstellung druckfester Holzfaserdämmstoffe mit Dicken von 3 bis 80 mm bei einer Rohdichte von 150 bis 200 kg/m³, vorzugsweise von 120 bis 160 kg/m³, eingesetzt.

Neben dem vorher genannten Auftragen des Bindemittels auf Ligninbasis auf einen Träger oder einem Einsatz als Bikomponentenmaterial kann das nach der Kondensation und Abtrennung erhaltene Produkt auch direkt als pulverförmiges Bindemittel auf den Holzwerkstoff aufgetragen werden. Dabei kann das pulverförmige Bindemittel allein aber auch zusätzlich zu den Bikomponentenmaterialien verwendet werden.

Nach dem Auftragen des Holzwerkstoff-Bindemittel-Gemisches auf eine Unterlage in gewünschter Höhe und Dichte wird auf Erweichungstemperatur des Bindemittels erwärmt. Dabei verkleben die Holzwerkstoffe, beispielsweise Holzfasern, mit Hilfe des Bindemittels an deren Kreuzungspunkten und bilden nach Abkühlung einen festen Verbund. Diese Variante wird vorzugsweise für dünne druckfeste Holzfaserdämmstoffe mit einer Dicke von 3 bis 25 mm und einer Rohdichte von 120 bis 260 kg/m³, vorzugsweise 150 bis 200 kg/m³, verwendet.

Neben dem Bindemittel in Faserform sowohl als Mono- als auch erfindungsgemäß als Bikomponente, können den Holzfaser-Bindemittel-Gemischen zusätzlich Kunststoffgranulate zugegeben werden. Diese Granulate können sowohl ohne als auch mit einer Ummantelung eines Bindemittels versehen zum Einsatz gelangen. Vorzugsweise wird als Ummantelung das erfindungsgemäße Bindemittel eingesetzt. Die Kunststoffgranulate werden zusammen mit den anderen Ausgangsstoffen gemischt oder aber die Kunststoffgranulate werden bei der Platten- bzw. Mattenherstellung auf das Holzfaser-Bindemittel-Gemisch aufgestreut. Besonders geeignet sind Kunststoffgranulate, wie sie bei der Aufarbeitung von Kunststoffartikeln aus dem dualen System anfallen.

In einer besonderen Variante kann bei der Anwendung des Bindemittels in Pulverform auch eine inhomogene Verteilung in der Holzfasermasse vorgenommen werden. Dadurch wird beispielsweise erreicht, dass die Festigkeit von einer großflächigen zur anderen großflächigen Seite der herzustellenden Platte bzw. Matte sich in gewünschter Weise ändert.

In den Figuren werden schematisch die unterschiedlichen Verklebungsvarianten gezeigt.

Es zeigen:

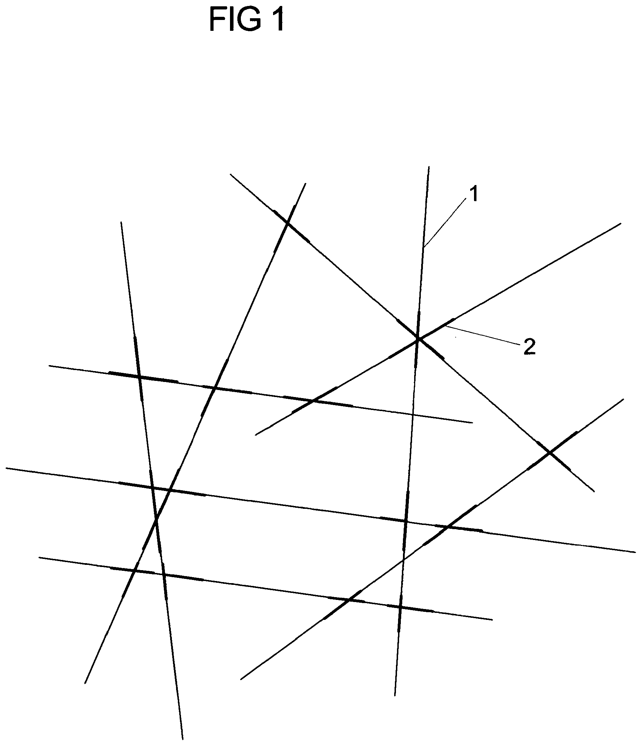

- Fig. 1: einen Verbund aus Holzfasern und Monokomponenten-Bindefasern auf Ligninbasis als Bindemittel;

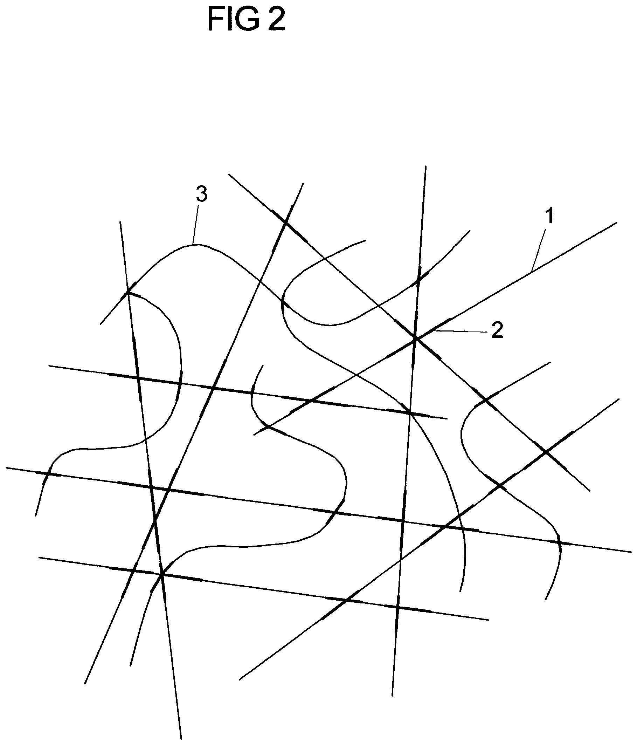

- Fig. 2: einen Verbund aus Holzfasern und Bikomponenten-Bindefasern mit einem Bindemittel auf Ligninbasis;

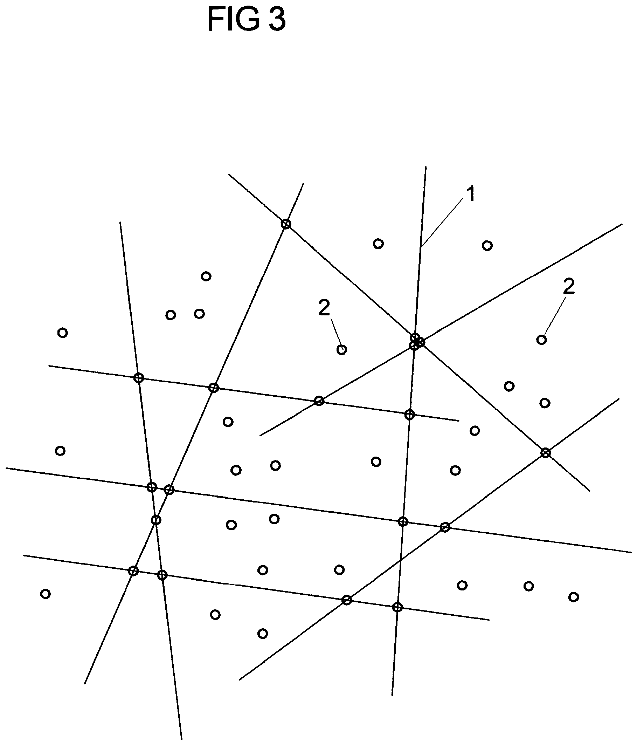

- Fig. 3: einen Verbund aus Holzfasern und einem Bindemittel auf Ligninbasis in Pulverform.

In den Figuren sind die Holzfasern mit 1, das Bindemittel auf Ligninbasis mit 2 und der Kern der Bikomponentenfasern (Stützfasern) mit 3 bezeichnet. An jedem Kreuzungspunkt von Holzfasern 1 oder von Holzfasern 1 mit Stützfasern 3 mit einem Mantel aus Bindemitteln 2 erfolgt eine Verklebung und damit Verfestigung bei der Verarbeitung.

Wie man sieht, ist eine vollständige Umhüllung des Trägers nicht notwendig. Eine teilweise Umhüllung reicht aus, da durch die Erwärmung bis zum Erweichungspunkt des Bindemittels auch ein Fließen des Bindemittels auf dem Träger einsetzt und damit eine gute Vernetzung der einzelnen Holzfasern untereinander und mit dem Träger erfolgt.

## Patentansprüche

1. Dämmstoffplatte bzw. -matte, aus einem Gemisch aus Holzfasern und einem Bikomponentenmaterial aus einem Träger und einem thermisch aktivierbaren ligninhaltigen Material als Bindemittel, wobei das ligninhaltige Material als Mantel auf dem Träger aufgetragen vorliegt, **dadurch gekennzeichnet, dass** der Träger aus Kunststoffstützfasern besteht.

2. Dämmstoffplatte bzw. -matte nach Anspruch 1, **gekennzeichnet durch** Polypropylen-, Polyethylen- oder Polyesterfasern als Kunststoffstützfasern als Träger.

3. Dämmstoffplatte bzw. -matte nach einem der vorhergehenden Ansprüche, **gekennzeichnet durch** eine homogene Verteilung des Bindemittels im Holzfaser-Bindemittelgemisch.

4. Dämmstoffplatte bzw. -matte nach einem der vorhergehenden Ansprüche, **gekennzeichnet durch** eine inhomogene Verteilung des Bindemittels im Holzfaser-Bindemittel-Gemisch.

5. Dämmstoffplatte bzw. -matte nach einem der vorhergehenden Ansprüche, **dadurch gekennzeichnet, dass** zur Herstellung des Bikomponentenmaterials eine flüssige Masse auf Ligninbasis auf den Träger bei gleichzeitiger oder nachfolgender Überführung der flüssigen Masse in den festen Aggregatzustand aufgebracht wird.

6. Dämmstoffplatte bzw. -matte nach einem der Ansprüche 1 bis 4, **dadurch gekennzeichnet, dass** zur Herstellung des Bikomponentenmaterials der Träger in eine flüssige Masse auf Ligninbasis getaucht und getrocknet wird.

7. Dämmstoffplatte bzw. -matte nach einem der Ansprüche 1 bis 4, **dadurch gekennzeichnet, dass** zur Herstellung des Bikomponentenmaterials der Träger mit einer Masse auf Ligninbasis besprüht und getrocknet wird.

8. Dämmstoffplatte bzw.-matte nach einem der Ansprüche 1 bis 4 soweit auf Kunststoffmaterial bezogen, **dadurch gekennzeichnet, dass** zur Herstellung des Bikomponentenmaterials der Träger bei gleichzeitiger Umhüllung mit einer Masse auf Ligninbasis koextruiert, abgekühlt und getrocknet wird.

## Claims

1. Insulating board or mat, made of a mixture of wood fibres and a bicomponent material consisting of a carrier and a thermally activatable lignin-containing material as a binder, the lignin-containing material being present as a sheath applied to the carrier, **characterised in that** the carrier consists of plastic support fibres.

2. Insulation board or mat according to claim 1, **characterised by** polypropylene, polyethylene or polyester fibres as plastic support fibres as a carrier.

3. Insulating board or mat according to one of the preceding claims, **characterised by** a homogeneous distribution of the binder in the wood fibre-binder mixture.

4. Insulation board or mat according to one of the preceding claims, **characterised by** an inhomogeneous distribution of the binder in the wood fibre-binder mixture.

5. Insulating board or mat according to one of the preceding claims, **characterised in that**, for the production of the bicomponent material, a lignin-based liquid mass is applied to the support with simultaneous or subsequent conversion of the liquid mass into the solid aggregate state.

6. An insulating board or mat according to any one of claims 1 to 4, **characterized in that** for the production of the bicomponent material the carrier is dipped into a lignin-based liquid mass and dried.

7. An insulating board or mat according to any one of claims 1 to 4, **characterised in that**, to produce the bicomponent material, the substrate is sprayed with a lignin-based composition and dried.

8. Insulating board or mat according to any of claims 1 to 4 as far as related to plastic material, **characterized in that** for the production of the bicomponent material the carrier is co-extruded, cooled and dried with simultaneous coating with a lignin-based mass.

## Revendications

1. Panneau ou tapis de matériau isolant composé d'un mélange composé de fibres de bois et d'un matériau à deux composants composé d'un support et d'un matériau contenant de la lignine pouvant être activé thermiquement en tant que liant, dans lequel le matériau contenant de la lignine se présente sous la forme d'une enveloppe appliquée sur le support, **caractérisé en ce que** le support est constitué de fibres synthétiques de soutien.

2. Panneau ou tapis de matériau isolant selon la revendication 1, **caractérisé par** des fibres de polypropylène, de polyéthylène ou de polyester en tant que fibres synthétiques de soutien en tant que support.

3. Panneau ou tapis de matériau isolant selon l'une quelconque des revendications précédentes, **caractérisé par** une répartition homogène du liant dans le mélange de fibres de bois-liant.

4. Panneau ou tapis de matériau isolant selon l'une quelconque des revendications précédentes, **caractérisé par** une répartition non homogène du liant dans le mélange fibres de bois-liant.

5. Panneau ou tapis de matériau isolant selon l'une quelconque des revendications précédentes, **caractérisé en ce que** pour fabriquer le matériau à deux composants, une masse liquide à base de lignine est appliquée sur le support lors du transfert simultané ou consécutif de la masse liquide dans l'état physique solide.

6. Panneau ou tapis de matériau isolant selon l'une quelconque des revendications 1 à 4, **caractérisé en ce que** pour fabriquer le matériau à deux composants, le support est plongé dans une masse liquide à base de lignine et est séché.

7. Panneau ou tapis de matériau isolant selon l'une quelconque des revendications 1 à 4, **caractérisé en ce que** pour fabriquer le matériau à deux composants, le support est pulvérisé d'une masse à base de lignine et est séché.

8. Panneau ou tapis de matériau isolant selon l'une quelconque des revendications 1 à 4, s'il se rapporte au matériau synthétique, **caractérisé en ce que** pour fabriquer le matériau à deux composants, le support est coextrudé lors de l'enveloppement simultané avec une masse à base de lignine, est refroidi et est séché.
